# FASCICULE DE BREVET EUROPEEN

(11) **EP 1 819 748 B1**
(45) Date de publication et mention de la délivrance du brevet: **29.10.2008**
(21) Numéro de dépôt: 05815132.5
(22) Date de dépôt: 26.10.2005
(51) Int. Cl.: C08G 18/10, C08G 18/48, C08G 18/50, G02B 1/04

(54) **RESINES POLYURETHANES, LEUR PROCEDE DE FABRICATION, ET LES LENTILLES OPTIQUES OBTENUES A PARTIR DE CES RESINES.**
POLYURETHANHARZE, HERSTELLUNGSVERFAHREN DAFÜR UND DARAUS HERGESTELLTE OPTISCHE LINSEN
POLYURETHANE RESINS, A METHOD FOR THE PRODUCTION THEREOF AND OPTICAL LENSES MADE OF SAID RESINS

(30) Priorité: 26.10.2004 FR 0411405
(43) Date de publication de la demande: 22.08.2007
(73) Titulaire: ESSILOR INTERNATIONAL (COMPAGNIE GENERALE D'OPTIQUE), 94220 Charenton le Pont (FR)
(72) Inventeur: LESARTRE, Noémie, F-94220 Charenton Le Pont (FR); BERIT-DEBAT, Fabien, 94220 Charenton-le-Pont (FR)
(74) Mandataire: de Mareüil-Villette, Caroline
(86) Numéro de dépôt international: PCT/FR2005/002685
(87) Numéro de publication internationale: WO 2006/045960

(56) Documents cités:
- EP-A- 1 197 505
- US-A- 5 045 623
- US-A- 6 127 505
- ANONYMOUS: "PX 521HT" INTERNET ARTICLE, [Online] 6 juillet 2004 (2004-07-06), XP002332835 Extrait de l'Internet: URL:http://www.axson.de/Axson/fiches/franc ais/px521ht.pdf> [extrait le 2005-06-21]

## Description

La présente invention a pour objet l'utilisation de résines polyuréthanes pour la fabrication de lentilles optiques résistantes aux chocs, les lentilles optiques, en particulier ophtalmiques, obtenues du fait de l'utilisation de ces résines, et le procédé de fabrication desdites lentilles.

Par lentille optique, on entend notamment les lentilles ophtalmiques et les lentilles pour instrument d'optiques.

Par lentille ophtalmique, on entend les lentilles s'adaptant à une monture de lunette pour protéger l'oeil et/ou corriger la vue, ces lentilles étant choisis parmi les lentilles afocales, unifocales, bifocales, trifocales et progressives.

Par substrat, on entend le matériau transparent constitutif de base de la lentille optique et plus particulièrement de la lentille ophtalmique. Ce matériau sert de support à l'empilement d'un ou plusieurs traitements, et participe à créer la fonction correctrice de la lentille dans le cas d'une lentille ophtalmique correctrice.

Par traitement, on entend tout revêtement pouvant être en contact avec le substrat, et/ou avec un autre revêtement, et pouvant notamment être un revêtement anti-reflets, antisalissures, primaire anti-chocs, anti-rayures et/ou polarisant.

Un substrat, pour répondre à sa fonction, doit posséder l'ensemble des caractéristiques suivantes :
- une transparence élevée (transmission généralement supérieure à 85 %, et de préférence supérieure ou égale à 90 %), avec une absence ou éventuellement une très faible diffusion de la lumière ;
- un faible indice de jaune et une absence de jaunissement au cours du temps ;
- une bonne résistance aux chocs selon les normes en vigueur ;
- une bonne aptitude aux traitements divers (dépôt de revêtement anti-reflets, antisalissures, primaire an ti-chocs, anti-rayures, polarisant...), et en particulier une bonne aptitude à la coloration ;
- une valeur de température de transition vitreuse (Tg) supérieure ou égale à 80°C, de préférence supérieure à 90°C, et très préférentiellement comprise entre 90°C et 120°C.

En outre, les résines thermodurcissables, constitutives du substrat de la lentille optique, doivent être faciles à mettre en oeuvre sur le plan industriel. Dans ce cadre la résine polymérisable mise en oeuvre selon l'invention, est particulièrement avantageuse. En effet, les éléments constitutifs de cette résine sont miscibles à température ambiante et une faible viscosité. Ces caractéristiques permettent notamment d'effectuer une formulation du polyuréthane par simple mélange des constituants à une température ambiante, et une coulée du mélange dans un moule approprié, à une température de 18 à 60°C, de préférence 18 à 50°C, très préférentiellement 20 à 40°C, encore plus préférentiellement à température ambiante. Le procédé de fabrication est donc simple, rapide, reproductible, et de faible coût économique, les cycles de chauffage étant courts et à des températures peu élevées.

Les résines thermodurcissables de polyuréthane sont connues de l'homme de l'art, pour être adaptées à la fabrication de lentilles optiques, notamment parce que ces résines présentent généralement une résistance aux chocs acceptable. Ainsi le brevet US 6,127,505 décrit une résine polyuréthane-urée préparée à partir d'un prépolymère, obtenu par mélange de diisocyanate aliphatique ou cycloaliphatique et d'un glycol, et de diamine aromatiques. La préparation du prépolymère lui-même se fait dans des conditions de chauffage comprises entre 100°C et 140°C pendant une durée de 3 à 5 heures, et le mélange du prépolymère avec l'amine nécessite au moins une étape de chauffage à une température de l'ordre de 75°C.

Le procédé de fabrication de lentilles optiques selon la présente invention diffère de l'art antérieur notamment en ce que l'étape dé mélange des deux compositions permettant la formation de la résine polyuréthane thermodurcissable ainsi que l'étape de cuisson, s'effectuent à des températures largement inférieures à celles mises en oeuvre dans les procédés de l'art antérieur. Le procédé de fabrication d'une lentille optique selon l'invention s'avère donc plus facile à mettre en oeuvre et permet un gain économique non négligeable.

Le substrat de lentille optique selon l'invention présente de plus une excellente résistante aux chocs, est facilement colorable, et peut être aisément revêtu dans des conditions usuelles. Cette résine constitue donc un matériau de choix en tant que substrat d'une lentille optique, et plus particulièrement en tant que substrat d'une lentille ophtalmique.

Un premier objet de l'invention concerne donc l'utilisation, pour la fabrication de lentilles optiques, d'une résine polyuréthane thermodurcissable comprenant :
- une partie (I), correspondant à la partie isocyanate, comprenant :
   (a) du méthylène-bis-4,4'-isocyanatecyclohexane (H₁₂MDI),
   (b) du prépolymère issu de la réaction entre le glycérol propoxylé et le méthylène-bis-4,4'-diisocyanatecyclohexane,
- une partie (II), correspondant à la partie alcool, comprenant :
   (c) du glycérol étherate alcoxylé sous sa forme monomère et oligomère,
   (d) au moins une diamine tertiaire polyalcoxylée tétraol et/ou triol.

La partie (II) présente une viscosité comprise entre 900 et 2500 mPa.s, préférentiellement entre 900 et 1800 mPa.s incluse, et la partie (I) présente une viscosité comprise entre 300 et 1000 mPa.s incluse.

Dans la partie (I) de la formulation, le composant (b) apporte de 5% à 15% inclus, et préférentiellement 10%, de fonction uréthane par rapport à la totalité des fonctions isocyantes présentes dans la partie (I).

Dans la partie (II) de la formulation, le glycérol étherate alcoxylé est de formule (C) :

HO-(R₁-O)ₙ-CH₂-CH(-(O-R₂)ₘ-OH)-CH2-(O-R₃)ₚ-OH **(C)**

dans laquelle :
- R₁, R₂ et R₃, identiques ou différents, indépendamment l'un de l'autre, représentent un groupement (C₂-C₄)alkylène, linéaire ou ramifié ;
- n, m et p, identiques ou différents, indépendamment l'un de l'autre, représentent un entier compris entre 1 et 6 inclus.

Les composés de formule (C) préférés selon l'invention sont ceux pour lesquels :
- R₁, R₂ et R₃, identiques, représentent un groupement éthylène ou un groupement isopropylène ;
- n, m et p, identiques, représentent un entier compris entre 1 et 3 inclus.

Selon une variante particulièrement avantageuse de l'invention, la partie (c) de la partie (II) de ladite résine comprend les composés de formule (C) dans laquelle :
- R₁, R₂ et R₃, identiques, représentent un groupement isoprogylène ;
- n, m et p, identiques, représentent un entier compris entre 1 et 3 inclus ;
- et le rapport entre la forme monomère (n = m = p = 1) et les formes oligomères (n = m = p > 1) est compris entre 100/0 et 90/10 inclus.

Dans la partie (II) de ladite résine, la partie (d) comprend au moins une diamine tertiaire polyalcoxylée tétraol et/ou triol de formule (D) :

R₄-N(R₅)-R₈-N(R₇)-R₆ **(D)**

dans laquelle :
- R₄, R₅ et R₆, identiques ou différents, indépendamment l'un de l'autre représentent un groupement de formule (D1) :

   -(R₉-O)ᵤ-(R₁₀-O)ᵥ-H **(D1)**

   o dans laquelle :
   o R₉ et R₁₀, identiques ou différents, indépendamment l'un de l'autre, représentent un groupement choisi parmi éthylène, *n*-propylène, et isopropylène ;
   o u et v, identiques ou différents, indépendamment l'un de l'autre, représentent un entier compris entre 0 et 3 inclus, étant entendu que u et v ne représentent pas simultanément la valeur 0 ;
- R₇ représente un atome d'hydrogène ou un groupement R₄ tel que défini précédemment ;
- R₈ représente un groupement (C₂-C₄)alkylène, linéaire ou ramifié.

Les composés de formule (D) préférés selon l'invention sont ceux pour lesquels :
- R₈ représente un groupement éthylène ;
- R₄, R₅ et R₆ sont identiques et définis tels que précédemment ;
- R₇ est tel que défini précédemment ; et
- R₉ et R₁₀ sont différents et définis tels que précédemment.

Selon une variante avantageuse de l'invention, la partie (d) de la partie (II) de ladite résine comprend :
i. au moins une diamine tertiaire polyalcoxylée tétraol de formule (D) dans laquelle :
   - R₄, R₅, R₆ et R₇, identiques représentent chacun un groupement de formule (D1) dans laquelle :
      - R₉ représente un groupement éthylène ;
      - R₁₀ représente un groupement isopropylène ;
      - u et v, identiques ou différents, indépendamment l'un de l'autre, représentent un entier compris entre 1 et 3 inclus ;
   - R₈ représente un groupement éthylène ;
ii. éventuellement une ou plusieurs diamine(s) tertiaire(s) polyalcoxylée(s) triol(s) de formule (D) dans laquelle :
   - R₄, R₅ et R₆ représentent chacun un groupement de formule (D1) dans laquelle :
      - R₉ représente un groupement éthylène ou isopropylène ;
      - R₁₀ représente un groupement isopropylène ou éthylène ;
      - u et v, identiques ou différents, indépendamment l'un de l'autre, représentent un entier compris entre 1 et 3 inclus ;
   - R₇ représente un atome d'hydrogène ;
   - R₈ représente un groupement éthylène ;
iii. et le rapport entre (i) et (ii) est compris entre 100/0 et 90/10 inclus.

Dans le cadre de l'invention, la résine polyuréthane comprend la partie (II) pour laquelle le rapport entre la partie (c) et la partie (d) est compris entre 70/30 et 95/5 inclus, préférentiellement entre 75/25 et 90/10 inclus, et très préférentiellement est égale à 80/20.

Le rapport molaire entre la partie (I) et la partie (II) de ladite résine est compris entre 0,95 et 1,1.

D'une façon surprenante la résine polyuréthane thermodurcissable utilisée conformément à l'invention génère un substrat, en vue de l'élaboration de lentille optique, à haute résistance aux chocs.

Un des points critiques pour l'obtention d'un matériau thermodurcissable hautement résistant aux chocs est d'optimiser le compromis entre un haut Tg (température de transition vitreuse) du matériau, et une bonne résistance aux chocs dudit matériau.

En effet, l'obtention d'un haut Tg est souhaitée, afin d'obtenir une rigidité du substrat qui permet d'éviter sa déformation lors de l'application de traitements ; un haut Tg est généralement obtenu en introduisant dans la résine des segments rigides qui relaxent à haut Tg.

L'obtention de la caractéristique de résistance aux chocs est généralement obtenue par introduction dans la résine de chaînes souples qui relaxent à faible T_{g} ou via la diminution de la densité de réticulation du matériau polymère contenu dans la résine. En effet une augmentation de la densité de réticulation du polymère a pour conséquence de restreindre la mobilité des chaînes de polymères et conduit à une diminution de la souplesse de la résine. Cette perte de souplesse a pour conséquence une diminution de la résistance aux chocs de la résine, due notamment au fait que la capacité de la résine à amortir les chocs par dissipation de l'énergie induite est amoindrie.

Il convient donc généralement de trouver un compromis entre ces deux caractéristiques qui nécessitent des matériaux aux propriétés contraires.

Comme décrite précédemment, la résine polyuréthane utilisée conformément à l'invention est constituée de deux entités: la partie (I) et la partie (II), la partie (I) correspondant à la partie isocyanate, et la partie (II) correspondant à la partie alcool et comprenant notamment au moins une diamine tertiaire polyalcoxylée tétraol et/ou triol (d). La présence d'au moins une amine tertiaire tri- ou tétra-fonctionnelle en groupement hydroxy, entraîne la formation, par réaction avec les fonctions isocyanates de la partie (I), d'une résine polyuréthane hautement réticulée.

La résine utilisée conformément à l'invention est donc à la fois hautement réticulée, présente un haut Tg, et contre toute attente, présente également une bonne résistance aux chocs.

De plus, la résine utilisée conformément à l'invention, est très simple à mettre en oeuvre, du fait notamment que les éléments qui la constituent sont miscibles à température ambiante et présentent une faible viscosité rendant le moulage (casting) aisé.

Les propriétés de la partie (II) de la résine utilisée selon l'invention, sont particulièrement importantes pour l'abaissement de la viscosité globale du mélange partie (I) + partie (II).

La miscibilité à température ambiante ainsi que la faible viscosité de cette résine polyuréthane en font un matériau de choix pour être ensuite mise en oeuvre dans un procédé de moulage (casting) traditionnel, un procédé RIM (Reaction injection Molding) ou RTM (Reaction Transfert Molding).

Suivant un mode de réalisation préféré de l'invention, la résine utilisée est la résine PX521 HT commercialisée par la société Axson.

La résine polyuréthane utilisée conformément à l'invention peut également comprendre des additifs classiquement utilisés dans les résines thermodurcissables pour le moulage de lentilles optiques, en particulier de lentilles ophtalmiques, dans des proportions classiquement utilisées. Parmi les additifs, on peut citer à titre indicatif et non limitatif, les colorants, les stabilisants de coloration, les éclaircissants optiques, les absorbeurs UV, les antioxydants, les anti-jaunissement, et les agents de démoulage.

Parmi les agents de démoulage utilisables dans le cadre de l'invention, on peut citer notamment le triméthylchlorosilane, le chlorométhyltriméthylsilane, le chloropropyltriméthylsilane, le chlorométhyldodecyl diméthylsilane, le (3,3-diméthylbutyl) diméthylcholrosilane, l'hexaméthyldisilazane, l'octaméthyltetrasilazane, l'aminopropyldiméthylpolydiméthylsiloxane, le chlorure de 3-triméthoxysilyl propyloctadécyldiméthylammonium, le chlorure d'ammonium de tétradecyldiméthyl(3-triméthoxysilylpropyl), le triméthylethoxysilane, et l'octadécyltrimethoxysilane.

Parmi les antioxydants utilisables, généralement dans des proportions allant jusqu'à 5 % en poids par rapport aux poids total des réactifs, on peut citer notamment les antioxydants phénoliques encombrés et polyfonctionnels.

Parmi les stabilisants UV on peut notamment citer les benzotriazoles.

L'invention a également pour objet un substrat de lentille optique, en particulier de lentille ophtalmique, caractérisé en ce qu'il est susceptible d'être obtenu à partir d'une résine polyuréthane thermodurcissable telle que définie ci-dessus, ladite résine ayant été moulée puis polymérisée.

Le substrat selon l'invention, peut être revêtu par différentes couches telles que : revêtement anti-abrasion; primaire d'adhésion; revêtement anti-reflet, revêtement anti-salissures, revêtement polarisant. Il peut également être coloré en utilisant les techniques classiques.

L'invention a encore pour objet un procédé de fabrication simple et économique de lentille optique, en particulier ophtalmique, à partir de la résine polyuréthane obtenue par la formulation de la partie (I) et la partie (II), **caractérisé en ce qu**'il comprend une étape de fabrication du substrat, dans laquelle on mélange les parties (I) et (II) de la résine telle que définie ci-dessus à une température comprise entre 18°C et 60°C inclus" préférentiellement entre 18°C et 50°C inclus, très préférentiellement entre 20°C et 40°C inclus, on remplit avec la résine obtenue un moule adapté pour la fabrication de lentilles optiques, ledit remplissage s'effectuant manuellement ou mécaniquement, puis on polymérise la résine placée dans le moule, de préférence entre 80°C et 130°C inclus, et on effectue ensuite une étape de recuit.

Les exemples qui suivent illustrent non limitativement l'utilisation d'une résine conformément à l'invention, et la fabrication d'un substrat pour lentille optique.

### Exemples:

### Utilisation de la résine PX521HT commercialisée par la société Axson.

La résine PX521HT entre dans le cadre de la formulation de la résine polyuréthane telle que décrite précédemment. Cette résine est obtenue par la polymérisation de :
- une partie (I), correspondant à la partie isocyanate, comprenant :
   (a) du méthylène-bis-4,4'-isocyanatecyclohexane (H₁₂MDI),
   (b) du prépolymère issu de la réaction entre le glycérol propoxylé et le méthylène-bis-4,4'-diisocyanatecyclohexane (a), (b) étant présent dans un rapport molaire de 10% de fonction uréthane par rapport à l'ensemble des fonctions isocyanates présentes dans la partie (I),
- une partie (II), correspondant à la partie alcool, comprenant au moins :
   (c) du glycérol propoxylate alcoxylé sous sa forme monomère et oligomère, le rapport entre la forme monomère et les formes oligomères étant compris entre 99/1 et 90/10,
   (d) de l'éthylène diamine propoxylée et éthoxylée tétraol et triol,
   (e) le rapport de (c) sur (d) étant compris entre 78/22 et 82/18.

### Exemples de préparation d'une lentille ophtalmique:

### ➢ Par coulée manuelle.

Les parties (I) et (II) sont homogénéisées et dégazées séparément sous atmosphère inerte et à température ambiante (20°C environ).

### Les étapes suivantes sont ensuite réalisées :

- Pesée de 16.67 g de la partie (I) dans un flacon en verre placé dans un bain thermostaté à température ambiante.
- Prélèvement de 9.17 g de la partie (II) dans une seringue.
- Mélange de (I) et (II) dans le flacon en verre. Homogénéisation et dégazage du mélange réactif durant 5 minutes à température ambiante.
- Prélèvement d'environ 15ml de mélange réactif à l'aide d'une seringue. Remplissage d'un assemblage scotch (constitué de deux moules en verre).
- Cycle de polymérisation dans l'étuve.

Rampe de température de 80°C à 130°C pendant 30 minutes. Palier à 130°C pendant 6 heures. Retour à 80°C en 30 minutes. Désassemblage du substrat polymérisé et recuit à 130°C pendant 2 heures (élimination des contraintes résiduelles).

### ➢ A l'aide d'une machine de type RTM (Reaction Transfer Molding)

Il s'agit d'une machine de coulée bi-composant fonctionnant à basse pression.

La machine a été fournie par la société DOPAG (modèle ELDOMIX™).

La partie (I) et la partie (II) sont dégazées et chauffées respectivement dans des cuves I et II séparées.

Lors de la coulée d'un substrat, les réactifs sont entraînés vers la tête de mélange par des pompes à engrenage ainsi que par la mise en pression des cuves (environ 2-3 bars). Les tuyaux amenant les réactifs des cuves jusqu'au « collecteur produit » sont également chauffés. La stoechiométrie est obtenue par le réglage de la vitesse de rotation de chacune des pompes. Le débit total est ajusté par un bouton de réglage agissant simultanément sur la vitesse de rotation des deux pompes à engrenages (la vitesse relative des deux pompes reste inchangée et par conséquent la stoechiométrie n'est pas modifiée).

L'ensemble « collecteur produit » et mélangeur constitue la tête de mélange.

Les réactifs alcools (partie (II))et isocyanates (partie (I)) sont mis en contact et homogénéisés dans le mélangeur appelé « statico-dynamic » par l'homme de l'art. L'âme du mélangeur est entraînée par une turbine pneumatique à vitesse variable.

### Paramètres de la machine de coulée DOPAG pour la formulation PX 521 HT:

### Filtration :

Taille des filtres : 1,2 microns
Température des cuves (I) et (II) : 40°C
Température des tuyaux (I) et (II) : 50°C
Agitation en fonctionnement
Durée de la filtration : 4 heures

### Dégazage :

Température des cuves (I) et (II) : 40°C
Températures des tuyaux (I) et (II) : 50°C
Agitation en fonctionnement
Durée du dégazage : 4 heures

### Coulée :

Pression des cuves (I) et (II) : 3 bars
Températures des cuves (I) et (II) : 40°C
Températures des tuyaux (I) et (II) : 50°C
Ratio de (I)/(II) : 62 %
Débit de coulée : 0,12 litre/min
Agitation en fonctionnement
Vitesse du mélangeur statico dynamique : maximum

Cycle de polymérisation et recuit identique à la coulée manuelle.

### Caractéristiques de PX521HT en tant que substrat de lentille optique:

| | | | |
|---|---|---|---|
| **d = 1,13** | **n_{D} = 1,5066** | ν**_{D} = 54** | **T_{g} = 120°C** |

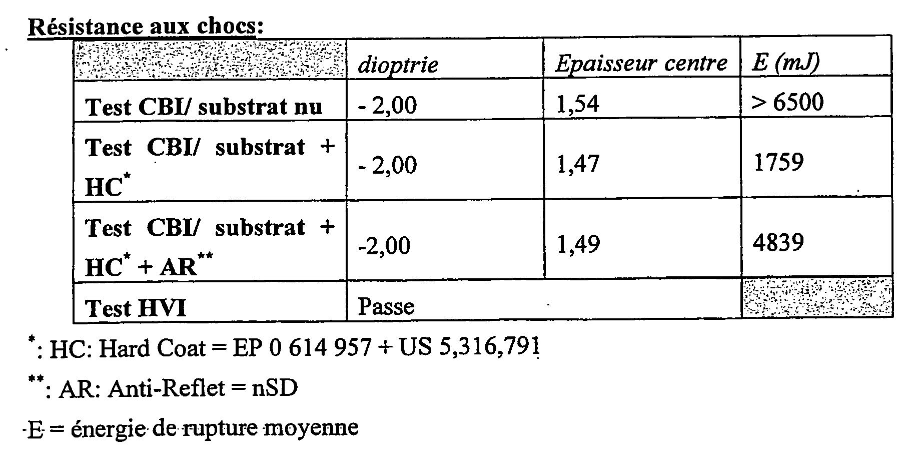

### Description des tests CBI et HVI:

- Test CBI (Norme ANSI 780)

La CBI est un test de chute de bille instrumentée. La CBI dispose de 3 impacteurs (40 g- 210g-520g) le choix de l'impacteur est déterminé par l'équipement en fonction des caractéristiques du verre testé. Un impacteur tombe au centre géométrique du verre à tester. La vitesse d'impact est de 5 m/s. Au cours du choc un capteur situé dans la bille mesure à tout instant la force appliquée et la flexion du verre. La grandeur physique suivie est l'énergie à tout instant du choc. Lorsque le verre casse, à cet instant précis, le logiciel donne l'énergie de rupture du verre. La CBI réalise un seul impact par verre, il ne faut pas retester les verres, le verre doit casser à chaque fois.

A chaque verre correspond une valeur d'énergie de rupture.

### - Test HVI

Vérification de la conformité d'un produit au test HVI (High Velocity Impact) décrit dans la norme ANSI Z87.1

Une bille d'acier de 6.35 mm de diamètre est projetée sur la lentille testée avec une vitesse de 150ft/s.

La lentille passe le test s'il ne casse pas.

Ce test oui/non est destructif.

## Revendications

1. Utilisation d'une résine polyuréthane thermodurcissable pour la fabrication de lentille optique, **caractérisée en ce que** ladite résine comprend :
- une partie (I), correspondant à la partie isocyanate, comprenant :
a) du méthylène-bis-4,4'-isocyanatecyclohexane (H₁₂MDI),
b) du prépolymère issu de la réaction entre le glycérol propoxylé et le méthylène-bis-4,4'-diisocyanatecyclohexane,
- une partie (II), correspondant à la partie alcool, comprenant :
c) du glycérol étherate alcoxylé sous sa forme monomère et oligomère,
d) au moins une diamine tertiaire polyalcoxylée tétraol et/ou triol.

2. Utilisation selon la revendication 1 **caractérisée en ce que :**
- ladite partie (II) présente une viscosité comprise entre 900 et 2500 mPa.s,
- et la partie (I) présente une viscosité comprise entre 300 et 1000 mPa.s.

3. Utilisation selon la revendication 2 **caractérisée en ce que :**
- ladite partie (II) présente une viscosité comprise entre 900 et 1800 mPa.s incluse,

4. Utilisation selon l'une des revendications précédentes **caractérisée en ce que** dans la partie (I) de la formulation, le composant (b) est présent dans un rapport molaire compris entre 5 % et 15 % inclus de fonction uréthane par rapport à l'ensemble des fonctions isocyanates présentes dans la partie (I).

5. Utilisation selon la revendication 4 **caractérisée en ce que** dans la partie (I) de la formulation, le composant (b) est présent dans un rapport molaire de 10 % de fonction uréthane par rapport à l'ensemble des fonctions isocyanates présentes dans la partie (I).

6. Utilisation selon l'une des revendications précédentes **caractérisée en ce que** dans la partie (II) de la formulation, le glycérol étherate alcoxylé (c) est de formule (C) :
HO-(R₁-O)ₙ-CH₂-CH(-(O-R₂)ₘ-OH)-CH₂-(O-R₃)ₚ-OH (C)
dans laquelle :
- R₁, R₂ et R₃, identiques ou différents, indépendamment l'un de l'autre, représentent un groupement (C₂-C₄)alkylène, linéaire ou ramifié;
- n, m et p, identiques ou différents, indépendamment l'un de l'autre, représentent un entier compris entre 1 et 6 inclus.

7. Utilisation selon la revendication 6 **caractérisée en ce que** les composés de formule (C) sont tels que :
- R₁, R₂ et R₃, identiques, représentent un groupement éthylène ou un groupement isopropylène ;
- n, m et p, identiques, représentent un entier compris entre 1 et 3 inclus.

8. Utilisation selon l'une quelconque des revendications 6 ou 7 **caractérisée en ce que** la partie (c) de la partie (II) de ladite résine comprend les composés de formule (C) dans laquelle :
- R₁, R₂ et R₃, identiques, représentent un groupement isopropylène ;
- n, m et p, identiques, représentent un entier compris entre 1 et 3 inclus ;
- et le rapport entre la forme monomère (n = m = p = 1) et les formes oligomères (n = m = p > 1) est compris entre 100/0 et 90/10 inclus.

9. Utilisation selon l'une des revendications précédentes **caractérisée en ce que** dans la partie (II) de ladite résine, la partie (d) comprend au moins une diamine tertiaire polyalcoxylée tétraol et/ou triol de formule (D) :
R₄-N(R₅)-R₈-N(R₇)-R₆ **(D)**
dans laquelle :
- R₄, R₅ et R₆, identiques ou différents, indépendamment l'un de l'autre représentent un groupement de formule (D1) :
-(R₉-O)ᵤ-(R₁₀-O)ᵥ-H **(D1)**
o dans laquelle :
o R₉ et R₁₀, identiques ou différents, indépendamment l'un de l'autre, représentent un groupement choisi parmi éthylène, *n*-propylène, et isopropylène ;
o u et v, identiques ou différents, indépendamment l'un de l'autre, représentent un entier compris entre 0 et 3 inclus, étant entendu que u et v ne représentent pas simultanément la valeur 0 ;
- R₇ représente un atome d'hydrogène ou un groupement R₄ tel que défini précédemment ;
- R₈ représente un groupement (C₂-C₄)alkylène, linéaire ou ramifié.

10. Utilisation selon la revendication 9 **caractérisée en ce que** les composés de formule (D) sont tels que :
- R₈ représente un groupement éthylène ;
- R₄, R₅ et R₆ sont identiques et définis tels que précédemment ;
- R₇ est tel que défini précédemment ; et
- R₉ et R₁₀ sont différents et définis tels que précédemment.

11. Utilisation selon l'une quelconque des revendications 9 ou 10 **caractérisée en ce que** la partie (d) de la partie (II) de ladite résine comprend :
i. au moins une diamine tertiaire polyalcoxylée tétraol de formule (D) dans laquelle :
- R₄, R₅, R₆ et R₇, identiques représentent chacun un groupement de formule (D1) dans laquelle :
• R₉ représente un groupement éthylène ;
• R₁₀ représente un groupement isopropylène ;
• u et v, identiques ou différents, indépendamment l'un de l'autre, représentent un entier compris entre 1 et 3 inclus ;
- R₈ représente un groupement éthylène ;
ii. éventuellement une ou plusieurs diamine(s) tertiaire(s) polyalcoxylée(s) triol(s) de formule (D) dans laquelle :
- R₄, R₅ et R₆ représentent chacun un groupement de formule (D1) dans laquelle :
• R₉ représente un groupement éthylène ou isopropylène ;
• R₁₀ représente un groupement isopropylène ou éthylène ;
• u et v, identiques ou différents, indépendamment l'un de l'autre, représentent un entier compris entre 1 et 3 inclus ;
- R₇ représente un atome d'hydrogène ;
- R₈ représente un groupement éthylène ;
iii. et le rapport entre (i) et (ii) est compris entre 100/0 et 90/10 inclus.

12. Utilisation selon l'une des revendications précédentes **caractérisée en ce que** dans la partie (II), le rapport entre la partie (c) et la partie (d) est compris entre 70/30 et 95/5 inclus.

13. Utilisation selon la revendication 12 **caractérisée en ce que** dans la partie (II), le rapport entre la partie (c) et la partie (d) est compris entre 75/25 et 90/10 inclus.

14. Utilisation selon l'une quelconque des revendications 12 ou 13 **caractérisée en ce que** dans la partie (II), le rapport entre la partie (c) et la partie (d) est égale à 80/20.

15. Utilisation selon l'une des revendications précédentes **caractérisée en ce que** le rapport molaire entre la partie (I) et la partie (II) de ladite résine est compris 0,95 et 1,1 inclus.

16. Substrat de lentille optique, **caractérisé en ce qu'**il est susceptible d'être obtenu à partir d'une résine polyuréthane thermodurcissable telle que définie dans l'une quelconque des revendications 1 à 15, ladite résine ayant été moulée puis polymérisée

17. Substrat selon la revendication 16, **caractérisé en ce qu'**il est revêtu d'au moins une couche telle que notamment un revêtement anti-abrasion; une primaire d'adhésion ; un revêtement anti-reflet, revêtement anti-salissures, revêtement polarisant.

18. Substrat selon l'une quelconque des revendications 16 ou 17, **caractérisé en ce qu'**il est coloré par des techniques classiques de coloration.

19. Lentille optique **caractérisée en ce qu'**elle comprend un substrat selon l'une quelconque des revendications 16 à 18.

20. Lentille optique selon la revendication 19, **caractérisée en ce que** ladite lentille est une lentille ophtalmique.

21. Procédé de fabrication d'une lentille optique, **caractérisé en ce qu'**il comprend une étape de fabrication du substrat, dans laquelle on mélange les parties (I) et (II) de la résine telle que définie dans l'une quelconque des revendications 1 à 15, à une température comprise entre 18°C et 60°C, on remplit avec la résine obtenue un moule adapté pour la fabrication de lentilles optiques, ledit remplissage s'effectuant manuellement ou mécaniquement, puis on polymérise la résine placée dans le moule, de préférence entre 80 et 130°C, et on effectue ensuite une étape de recuit.

22. Procédé de fabrication selon la revendication 21 **caractérisé en ce que** ladite étape de mélange des parties (I) et (II) de la résine s'effectue à une température comprise entre 20°C et 40°C.

## Claims

1. The use of a thermosetting polyurethane resin for manufacturing optical lenses, **characterized in that** said resin comprises:
- a part (I), corresponding to the isocyanate part, comprising:
a) 4, 4'-methylene-bis-(isocyanatecyclohexane) (H₁₂MDI);
b) a prepolymer derived from the reaction between propoxylated glycerol and 4, 4'-methylene-bis-(diisocyanatecyclohexane);
- a part (II), corresponding to the alcohol part, comprising:
c) alkoxylated glycerol etherate in its monomer and oligomer form;
d) at least one polyalkoxylated tertiary diamine tetraol and/or triol.

2. The use as claimed in claim 1, **characterized in that:**
- said part (II) has a viscosity between 900 and 2500 mPa.s; and
- the part (I) has a viscosity between 300 and 1000 mPa.s.

3. The use as claimed in claim 2, **characterized in that:**
- said part (II) has a viscosity between 900 and 1800 mPa.s inclusive.

4. The use as claimed in one of the preceding claims, **characterized in that** in the part (I) of the formulation, the component (b) is present in a molar ratio of urethane functional group relative to all the isocyanate functional groups present in part (I) of between 5% and 15% inclusive.

5. The use as claimed in claim 4, **characterized in that** in part (I) of the formulation, the component (b) is present in a molar ratio of urethane functional groups relative to all the isocyanate functional groups present in part (I) of 10%.

6. The use as claimed in one of the preceding claims, **characterized in that** in the part (II) of the formulation, the alkoxylated glycerol etherate (c) is of formula (C):
HO-(R₁-O)ₙ-CH₂-CH(-(O-R₂)ₘ-OH)-CH₂-(O-R₃)ₚ-OH (C)
in which:
- R₁, R₂ and R₃, being identical or different, independently of one another, represent a linear or branched (C₂-C₄) alkylene group; and
- n, m and p, being identical or different, independently of one another, represent an integer between 1 and 6 inclusive.

7. The use as claimed in claim 6, **characterized in that** the compounds of formula (C) are such that:
- R₁, R₂ and R₃, being identical, represent an ethylene group or an isopropylene group; and
- n, m and p, being identical, represent an integer between 1 and 3 inclusive.

8. The use as claimed in either one of claims 6 and 7, **characterized in that** the part (c) of part (II) of said resin comprises the compounds of formula (C) in which:
- R₁, R₂ and R₃, being identical, represent an isopropylene group;
- n, m and p, being identical, represent an integer between 1 and 3 inclusive; and
- the ratio between the monomer form (n = m = p = 1) and the oligomer forms (n = m = p > 1) is between 100/0 and 90/10 inclusive.

9. The use as claimed in one of the preceding claims, **characterized in that** in part (II) of said resin, part (d) comprises at least one polyalkoxylated tertiary diamine tetraol and/or triol of formula (D):
R₄-N(R₅)-R₈-N(R₇)-R₆ (D)
in which:
- R₄, R₅ and R₆, being identical or different, independently of one another, represent a group of formula (D1):
- (R₉-O)ᵤ-(R₁₀-O)ᵥ-H **(D1**)
o in which:
o R₉ and R₁₀, being identical or different, independently from one another, represent a group chosen from ethylene, n-propylene and isopropylene;
o u and v, being identical or different, independently from one another, represent an integer between 0 and 3 inclusive, it being understood that u and v do not represent the value 0 at the same time;
- R₇ represents a hydrogen atom or an R₄ group as defined previously; and
- R₈ represents a linear or branched (C₂-C₄) alkylene group.

10. The use as claimed in claim 9, **characterized in that** the compounds of formula (D) are such that:
- R₈ represents an ethylene group;
- R₄, R₅ and R₆ are identical and as defined previously;
- R₇ is as defined previously; and
- R₉ and R₁₀ are different and as defined previously.

11. The use as claimed in either one of claims 9 and 10, **characterized in that** part (d) of the part (II) of said resin comprises:
i. at least one polyalkoxylated tertiary diamine tetraol of formula (D) in which:
- R₄, R₅, R₆ and R₇, being identical, each represent a group of formula (D1) in which:
• R₉ represents an ethylene group;
• R₁₀ represents an isopropylene group;
• u and v, being identical or different, independently of one another, represent an integer between 1 and 3 inclusive;
- R₈ represents an ethylene group;
ii. possibly one or more polyalkoxylated tertiary diamine triol(s) of formula (D) in which:
- R₄, R₅ and R₆ each represent a group of formula (D1) in which:
• R₉ represents an ethylene or isopropylene group;
• R₁₀ represents an isopropylene or ethylene group;
• u and v, being identical or different, independently of one another, represent an integer between 1 and 3 inclusive;
- R₇ represents a hydrogen atom;
- R₈ represents an ethylene group; and
iii. the ratio between (i) and (ii) is between 100/0 and 90/10 inclusive.

12. The use as claimed in one of the preceding claims, **characterized in that** in part (II), the ratio between part (c) and part (d) is between 70/30 and 95/5 inclusive.

13. The use as claimed in claim 12, **characterized in that** in part (II), the ratio between part (c) and part (d) is between 75/25 and 90/10 inclusive.

14. The use as claimed in either one of claims 12 and 13, **characterized in that** in part (II), the ratio between part (c) and part (d) is equal to 80/20.

15. The use as claimed in one of the preceding claims, **characterized in that** the molar ratio between part (I) and part (II) of said resin is between 0.95 and 1.1 inclusive.

16. An optical lens substrate, **characterized in that** it is obtainable from a thermosetting polyurethane resin as defined in any one of claims 1 to 15, said resin having been molded and then cured.

17. The substrate as claimed in claim 16, **characterized in that** it is coated with at least one layer such as, especially, an abrasion-resistant coating; an adhesion primer; an antireflection coating, antisoiling coating, polarizing coating.

18. The substrate as claimed in either one of claims 16 and 17, **characterized in that** it is colored by conventional coloring techniques.

19. An optical lens, **characterized in that** it comprises a substrate as claimed in any one of claims 16 to 18.

20. The optical lens as claimed in claim 19, **characterized in that** said lens is an ophthalmic lens.

21. A method for manufacturing an optical lens, **characterized in that** it comprises a step of manufacturing the substrate, in which parts (I) and (II) of the resin as defined in any one of claims 1 to 15 are mixed, at a temperature between 18°C and 60°C, a mold suitable for manufacturing optical lenses is filled with the resin obtained, said mold-filling being carried out manually or mechanically, then the resin placed in the mold is cured, preferably between 80 and 130°C, and then an annealing step is carried out.

22. The manufacturing method as claimed in claim 21, **characterized in that** said step of mixing parts (I) and (II) of the resin is carried out at a temperature between 20°C and 40°C.

## Patentansprüche

1. Verwendung eines wärmeaushärtbaren Polyurethanharzes zur Herstellung einer optischen Linse, **dadurch gekennzeichnet, dass** dieses Harz:
- einen Teil (I), der dem Isocyanatteil entspricht und:
a) Methylen-bis-4,4'-isocyanatocyclohexan (H₁₂MDI) und
b) ein Prepolymer, das aus der Umsetzung von propoxyliertem Glycerin mit Methylen-bis-4,4'-diisocyanatocyclohexan hervorgegangen ist, umfasst, und
- einen Teil (II), der dem Alkoholteil entspricht und:
c) alkoxyliertes Glycerinetherat in seiner monomeren und oligomeren Form und
d) mindestens ein polyalkoxyliertes tertiäres Diamintetraol und/oder -triol umfasst,
umfasst.

2. Verwendung nach Anspruch 1, **dadurch gekennzeichnet, dass:**
- der Teil (II) eine Viskosität von 900 bis 2500 mPa·s und
- der Teil (I) eine Viskosität von 300 bis 1000 mPa·s besitzt.

3. Verwendung nach Anspruch 2, **dadurch gekennzeichnet, dass** der Teil (II) eine Viskosität von 900 bis 1800 mPa·s besitzt.

4. Verwendung nach einem der vorhergehenden Ansprüche, **dadurch gekennzeichnet, dass** im Teil (I) der Formulierung die Komponente (b) mit einem Molverhältnis der Urethanfunktionen in Bezug auf alle im Teil (I) vorhandenen Isocyanatfunktionen von 5 % bis 15 % vorhanden ist.

5. Verwendung nach Anspruch 4, **dadurch gekennzeichnet, dass** im Teil (I) der Formulierung die Komponente (b) mit einem Molverhältnis der Urethanfunktionen in Bezug auf alle im Teil (I) vorhandenen Isocyanatfunktionen von 10 % vorhanden ist.

6. Verwendung nach einem der vorhergehenden Ansprüche, **dadurch gekennzeichnet, dass** im Teil (II) der Formulierung das alkoxylierte Glycerinetherat (c) die Formel (C) hat:
HO-(R₁-O)ₙ-CH₂-CH(-(O-R₂)ₘ-OH)-CH₂-(O-R₃)ₚ-OH (C),
in welcher:
- R₁, R₂ und R₃, die identisch oder voneinander verschieden sind, unabhängig voneinander eine geradkettige oder verzweigte (C₂- bis C₄-)Alkylengruppe und
- n, m und p, die identisch oder voneinander verschieden sind, unabhängig voneinander eine ganze Zahl von 1 bis 6 bedeuten.

7. Verwendung nach Anspruch 6, **dadurch gekennzeichnet, dass** die Verbindungen mit der Formel (C) derart sind, dass:
- R₁, R₂ und R₃, die identisch sind, eine Ethylengruppe oder eine Isopropylengruppe bedeuten und
- n, m und p, die identisch sind, eine ganze Zahl von 1 bis 3 bedeuten.

8. Verwendung nach Anspruch 6 oder 7, **dadurch gekennzeichnet, dass** der Teil (c) des Teils (II) des Harzes die Verbindungen mit der Formel (C) umfasst, in welcher:
- R₁, R₂ und R₃, die identisch sind, eine Isopropylengruppe und
- n, m und p, die identisch sind, eine ganze Zahl von 1 bis 3 bedeuten und
- das Verhältnis von monomerer Form (n = m = p = 1) zu den oligomeren Formen (n = m = p > 1) 100/0 bis 90/10 beträgt.

9. Verwendung nach einem der vorhergehenden Ansprüche, **dadurch gekennzeichnet, dass** im Teil (II) des Harzes der Teil (d) mindestens ein polyalkoxyliertes tertiäres Diamintetraol und/oder -triol der Formel (D):
R₄-N(R₅)-R₈-N(R₇)-R₆ (D)
umfasst, in welcher:
- R₄, R₅ und R₆, die identisch oder voneinander verschieden sind, unabhängig voneinander eine Gruppe der Formel (D1) bedeuten:
-(R₉-O)ᵤ-(R₁₀-O)ᵥ-H (D1)
o in welcher:
o R₉ und R₁₀, die identisch oder voneinander verschieden sind, unabhängig voneinander eine Gruppe Ethylen, n-Propylen oder Isopropylen bedeuten, und
o u und v, die identisch oder voneinander verschieden sind, unabhängig voneinander eine ganze Zahl von 0 bis 3 bedeuten, vorausgesetzt, dass u und v nicht gleichzeitig den Wert 0 annehmen,
- R₇ ein Wasserstoffatom oder eine wie zuvor definierte R₄-Gruppe und
- R₈ eine geradkettige oder verzweigte (C₂- bis C₄-)Alkylengruppe bedeutet.

10. Verwendung nach Anspruch 9, **dadurch gekennzeichnet, dass** die Verbindungen der Formel (D) derart sind, dass:
- R₈ eine Ethylengruppe bedeutet,
- R₄, R₅ und R₆ identisch und wie zuvor definiert sind,
- R₇ wie zuvor definiert ist und
- R₉ und R₁₀ voneinander verschieden und wie zuvor definiert sind.

11. Verwendung nach Anspruch 9 oder 10, **dadurch gekennzeichnet, dass** der Teil (d) des Teils (II) des Harzes umfasst:
i. mindestens ein polyalkoxyliertes tertiäres Diamintetraol der Formel (D), in welcher:
- R₄, R₅, R₆ und R₇ identisch sind und jeweils eine Gruppe mit der Formel (D1) bedeuten, in welcher:
• R₉ eine Ethylengruppe und
• R₁₀ eine Isopropylengruppe bedeutet und
• u und v, die gegebenenfalls voneinander verschieden sind, unabhängig voneinander eine ganze Zahl von 1 bis 3 bedeuten und
- R₈ eine Ethylengruppe bedeutet,
ii. gegebenenfalls ein oder mehrere polyalkoxylierte tertiäre Diamintriole mit der Formel (D), in welcher:
- R₄, R₅ und R₆ jeweils eine Gruppe der Formel (D1) bedeuten, in welcher:
• R₉ eine Ethylen- oder Isopropylengruppe und
• R₁₀ eine Isopropylen- oder Ethylengruppe bedeutet und
• u und v, die identisch oder voneinander verschieden sind, unabhängig voneinander eine ganze Zahl von 1 bis 3 bedeuten,
- R₇ ein Wasserstoffatom und
- R₈ eine Ethylengruppe bedeutet und
iii. das Verhältnis von (i) zu (ii) 100/0 bis 90/10 beträgt.

12. Verwendung nach einem der vorhergehenden Ansprüche, **dadurch gekennzeichnet, dass** im Teil (II) das Verhältnis von Teil (c) zu Teil (d) 70/30 bis 95/5 beträgt.

13. Verwendung nach Anspruch 12, **dadurch gekennzeichnet, dass** im Teil (II) das Verhältnis von Teil (c) zu Teil (d) 75/25 bis 90/10 beträgt.

14. Verwendung nach Anspruch 12 oder 13, **dadurch gekennzeichnet, dass** im Teil (II) das Verhältnis von Teil (c) zu Teil (d) 80/20 beträgt.

15. Verwendung nach einem der vorhergehenden Ansprüche, **dadurch gekennzeichnet, dass** das Molverhältnis von Teil (I) zu Teil (II) des Harzes 0,95 bis 1,1 beträgt.

16. Substrat für eine optische Linse, **dadurch gekennzeichnet, dass** es aus einem wärmeaushärtbaren Polyurethanharz wie in einem der Ansprüche 1 bis 15 definiert erhältlich ist, wobei das Harz geformt und anschließend polymerisiert worden ist.

17. Substrat nach Anspruch 16, **dadurch gekennzeichnet, dass** es mit mindestens einer Schicht, insbesondere einer abriebfesten Beschichtung, einem Haftvermittler, einer Antireflexbeschichtung, einer schmutzabweisenden Beschichtung oder einer polarisierenden Beschichtung überzogen worden ist.

18. Substrat nach Anspruch 16 oder 17, **dadurch gekennzeichnet, dass** es durch herkömmliche Färbungsverfahren gefärbt worden ist.

19. Optische Linse, **dadurch gekennzeichnet, dass** sie ein Substrat nach einem der Ansprüche 16 bis 18 umfasst.

20. Optische Linse nach Anspruch 19, **dadurch gekennzeichnet, dass** diese Linse eine ophthalmische Linse ist.

21. Verfahren zur Herstellung einer optischen Linse, **dadurch gekennzeichnet, dass** es eine Stufe zur Herstellung des Substrates umfasst, in welcher die Teile (I) und (II) des wie in einem der Ansprüche 1 bis 15 definierten Harzes bei einer Temperatur von 18 bis 60 °C vermischt werden, mit dem erhaltenen Harz eine Form, die für die Herstellung optischer Linsen geeignet ist, gefüllt wird, wobei dieser Füllvorgang manuell oder mechanisch erfolgt, anschließend das in der Form befindliche Harz, vorzugsweise zwischen 80 und 130 °C, polymerisiert und danach ein Aushärtungsschritt durchgeführt wird.

22. Herstellungsverfahren nach Anspruch 21, **dadurch gekennzeichnet, dass** die Stufe zum Vermischen der Teile (I) und (II) des Harzes bei einer Temperatur von 20 bis 40 °C durchgeführt wird.
